# EUROPÄISCHE PATENTSCHRIFT

(11) **EP 2 447 579 B1**
(45) Veröffentlichungstag und Bekanntmachung des Hinweises auf die Patenterteilung: **19.11.2014**
(21) Anmeldenummer: 11007380.6
(22) Anmeldetag: 09.09.2011
(51) Int. Cl.: F16K 15/03

(54) **Selbsttätig schließende Rückschlagklappe**
Self-actuated non-return flap
Clapet battant à fermeture automatique

(30) Priorität: 26.10.2010 DE 102010049665
(43) Veröffentlichungstag der Anmeldung: 02.05.2012
(73) Patentinhaber: Adams Armaturen GmbH, 44653 Herne (DE)
(72) Erfinder: Obieglo, Andy, 45894 Gelsenkirchen (DE)
(74) Vertreter: Behrendt, Arne

(56) Entgegenhaltungen:
- DE-A1- 2 716 568
- US-A- 2 763 287
- US-A- 5 305 787

## Beschreibung

Die Erfindung betrifft eine selbsttätig schließende Rückschlagklappe für fließende Druckmedien, mit einer in einer kreisrunden Durchtrittsöffnung eines Klappengehäuses angeordneten Klappenscheibe, die an ihrem äußeren Umfang mit einer Dichtfläche versehen ist, die mit einer dazu passenden Dichtfläche eines an der Innenseite der Durchtrittsöffnung befindlichen Dichtringes zusammenwirkt, wobei die durch den Außenumfang der Klappenscheibe und den Innenumfang des Sitzringes definierte Schließebene geneigt gegen eine orthogonal zur Längsachse der Durchtrittsöffnung verlaufenden Ebene verläuft und die Klappenscheibe um eine die Durchtrittsöffnung querende Achse verschwenkbar gelagert ist, die oberhalb der Längsachse der Durchtrittsöffnung und Oberhalb der Klappenscheibe angeordnet ist, derart, dass die Klappenscheibe vom Druck des durchfließenden Druckmediums in die Offenstellung verschwenkt wird und durch ihr Eigengewicht aus der Offenstellung in die Schließstellung fällt.

Derartige Schrägsitz-Rückschlagklappen sind nach dem Stand der Technik bekannt und werden in erster Linie in der Dampfzuführung von Dampfturbinen eingesetzt, um diese bei Abfall der Last schnell absperren zu können. In diesem Fall besteht nämlich die Gefahr, dass die im Dampfzuführungssystem gespeicherte Energie die Dampfturbine auf unzulässig hohe Drehzahlen beschleunigt, wenn die Dampfzufuhr nicht sehr schnell unterbrochen wird. Ein ähnliches Problem gibt es bei großen Kompressoranlagen, bei denen das aus dem Druckluftnetz zurückströmende Druckmedium den Kompressor auf unzulässig hohe Drehzahlen beschleunigen kann, wenn dessen Antrieb ausfällt. In diesem Fall verhindert die schnell schließende Schrägsitz-Rückschlagklappe in der Druckleitung das Zurückströmen von Druckmedium zum Kompressor hin.

Ein wichtiger Vorteil einer solchen Schrägsitz-Rückschlagklappe gegenüber Rückschlagklappen mit orthogonal zur Längsachse der Durchtrittsöffnung verlaufenden Schließebene besteht darin, dass der von der Klappenscheibe von der Offenstellung in die Schließstellung zurückzulegende Winkelweg wegen der Schräglage der Schließebene erheblich verkürzt ist, sodass die Klappenscheibe sehr schnell und leichtgängig von der Offenstellung in die Schließstellung fällt. Dabei ist der Winkelweg von der Offenstellung in die Schließstellung umso kürzer, je größer die Neigung der Schließebene gegen die orthogonal zur Längsachse der Durchtrittsöffnung verlaufende Ebene ist. Dieser Vergrößerung des Neigungswinkels der Schließebene sind aber dadurch Grenzen gesetzt, dass sowohl die Dichtfläche am Außenumfang der Klappenscheibe als auch die Dichtfläche am Innenumfang des Sitzringes in ihrer Umfangsrichtung kreisrund sind, so dass der an der Innenseite des Gehäuses befindliche Sitzring infolge seiner kreisrunden Gestalt die lichte Weite der Durchtrittsöffnung im Bereich des Sitzringes einengt, wobei diese Einengung mit jeder Vergrößerung der oben erläuterten Neigung der Schließebene zunimmt. Diese Verkleinerung der lichten Weite im Bereich des Sitzringes führt zu einer Drosselung des durchtretenden Druckmediums und damit zu unerwünschten Energieverlusten.

Es ist Aufgabe der Erfindung, die Rückschlagklappe der eingangs genannten Art dahingehend weiterzubilden, dass unter Beibehaltung der lichten Weite der Durchtrittsöffnung des Klappengehäuses die in der Öffnungsstellung erreichbare lichte Weite im Bereich des Sitzringes vergrößert wird, und zwar möglichst unabhängig von der Neigung der Schließebene.

Zur Lösung dieser Aufgabe schlägt die Erfindung ausgehend von der Rückschlagklappe der eingangs genannten Art vor, dass die Dichtfläche am äußeren Umfang der Klappenscheibe und die dazu passende Dichtfläche am inneren Umfang des Sitzringes in Umfangsrichtung derart oval ausgebildet sind, dass sie die Form einer Mantelfläche eines schiefen Kegelstumpfes aufweisen und sich in dieser Mantelfläche eine Schar von Ebenen abbilden lässt, von denen wenigstens eine in der Projektion auf die orthogonal zur Längsachse der Durchtrittsöffnung verlaufenden Ebene kreisrund ist oder derart von der Kreisform abweicht, dass der Quotient aus kleiner Achse a und großer Achse b größer als 0,98 ist.

Durch diese Ausgestaltung der Klappenscheibe und des Sitzringes gelingt es, die lichte Weite der Durchtrittsöffnung im Bereich des Sitzringes gegenüber dem Stand der Technik erheblich zu vergrößern, und zwar weitgehend unabhängig von der Neigung der Schließebene. Versuche haben ergeben, dass nach der Lehre der Erfindung eine Vergrößerung der lichten Weite in dem angegebenen Bereich von bis zu 20 % erreichbar ist.

Durch die ovale Form der Dichtflächen von Klappenscheibe und Sitzring wird zwar eine geometrisch komplizierte Bearbeitung der Dichtflächen erforderlich, was allerdings mit modernen Bearbeitungseinrichtungen keine besonderen Schwierigkeiten mehr bedeutet.

Eine besonders bevorzugte Ausführungsform der Erfindung sieht vor, dass die Dichtflächen von Klappenscheibe und Sitzring aus Metall bestehen. Die ausschließlich aus Metall bestehende Dichtungspaarung ist insofern wichtig, als die Dichtflächen von Klappenscheibe und Sitzring ständig dem durchströmenden Druckmedium und dessen Temperaturen ausgesetzt sind. Metallische Dichtungen neigen weniger zum Verklemmen, Festfressen oder Verkleben und sind jederzeit leichtgängig zu öffnen und zu schließen.

Zur Verbesserung der Dichtwirkung sind die Dichtflächen von Klappenscheibe und Sitzring zweckmäßig feinbearbeitet. Solche feinbearbeiteten Dichtflächen führen zu einem absolut dichten Verschluss, und zwar weitgehend unabhängig von der Druckdifferenz und der Beschaffenheit des Druckmediums.

Um den beim schnellen Zuschlagen der Klappenscheibe unvermeidlich auftretenden Schlägen und Stößen ohne Beschädigung besser standhalten zu können, sind die Dichtflächen von Klappenscheibe und /oder Sitzring darüber hinaus gehärtet.

Ein Ausführungsbeispiel der Erfindung wird im Folgenden anhand der Zeichnung näher erläutert. Es zeigen:
- Figur 1:: Eine erfindungsgemäß ausgebildete Rückschlagklappe und deren Gehäuse in einem vertikalen Längsschnitt durch das Gehäuse;
- Figur 2:: die Rückschlagklappe und das Gehäuse gemäß Figur 1 in einem horizontalen Längsschnitt;
- Figur 3:: eine Ansicht zu Figur 1 in Strömungsrichtung des Druckmediums;
- Figur 4:: die Projektion einer der Dichtflächen von Klappenscheibe und Sitzring auf eine orthogonal zur Längsachse der Durchtrittsöffnung des Gehäuses verlaufende Ebene, wobei der Quotient aus kleiner Ellipsenachse a und großer Ellipsenachse b größer als 0,98 ist;
- Figur 5:: Darstellung des Schrägenwinkels α zwischen der Schließebene und der Längsachse des Gehäuses in einem vertikalen Längsschnitt durch das Gehäuse;
- Figur 6:: Darstellung des Strömungswiderstandes nach Stand der Technik;
- Figur 7:: Darstellung des Strömungswiderstandes nach Lehre der Erfindung, nach der die lichte Weite um 20 % vergrößert ist;

In der Zeichnung ist ein Klappengehäuse mit dem Bezugszeichen 1 bezeichnet. Das Klappengehäuse 1 ist innen mit einer Durchtrittsöffnung 2 versehen, die einen kreisrunden Querschnitt hat und deren Längsachse mit dem Bezugszeichen 3 bezeichnet ist. Am inneren Umfang der Durchtrittsöffnung 2 ist ein Sitzring 4 befestigt, der an seinem inneren Umfang mit einer Dichtfläche 5 versehen ist.

Weiterhin ist in der Durchtrittsöffnung 2 des Gehäuses 1 eine Klappenscheibe 6 angeordnet, die an ihrem äußeren Umfang mit einer Dichtfläche 7 versehen ist und die um eine die Durchtrittsöffnung 2 des Klappengehäuses 1 querende Schwenkachse 8 verschwenkbar an dem Klappengehäuse 1 gelagert ist. Der innere Umfang des Sitzringes 4 und der äußere Umfang der in der Schließstellung befindlichen Klappenscheibe 6 definieren gemeinsam eine Schließebene X, die gegen eine orthogonal zur Längsachse 3 der Durchtrittsöffnung 2 verlaufende Ebene Y geneigt verläuft. In der dargestellten Schließstellung liegen die beiden zusammenpassenden Dichtflächen 5 und 7 des Sitzringes 4 und der Klappenscheibe 6, die beide aus Metall bestehen, feinbearbeitet und gehärtet sind, dichtend aneinander an.

Die Schwenkachse 8 ist derart oberhalb der Längsachse 3 der Durchtrittsöffnung 2 und oberhalb der Klappenscheibe 6 angeordnet, dass die Klappenscheibe 6 durch ihr Eigengewicht in die dargestellte Schließstellung fällt und durch den Druck des in Strömungsrichtung S durchströmenden Druckmediums aus dieser Schließstellung herausgehoben und in die Offenstellung verschwenkt wird. Damit die Klappenscheibe 6 selbstständig schließt, muss die Schließebene X schräg zur Längsachse 3 des Klappengehäuses 1 verlaufen, wobei der Schrägenwinkel α zwischen der Schließebene X und der Längsachse 3 des Klappengehäuses 1 kleiner als 52° ist.

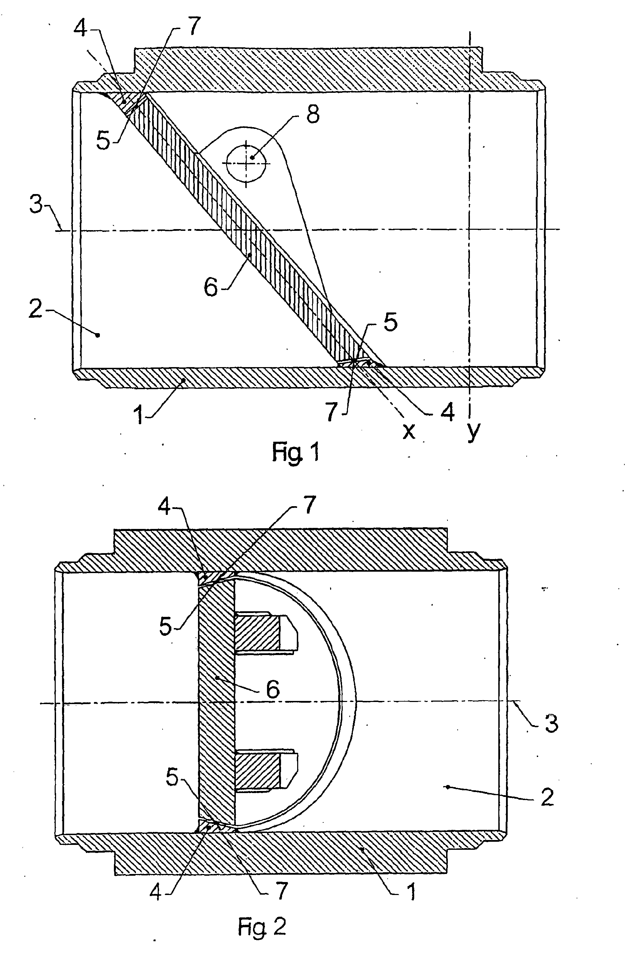

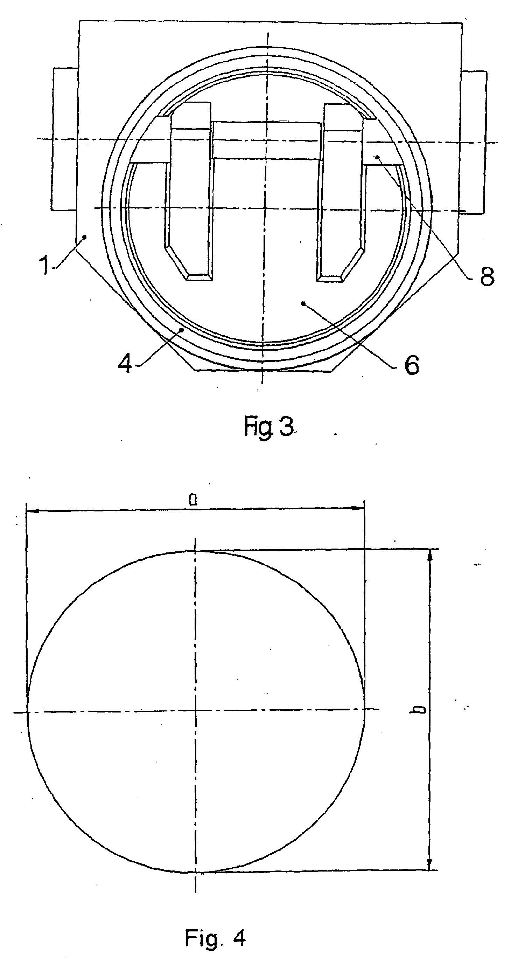

Die Besonderheit der Erfindung besteht darin, dass, wie aus den Figuren 1 und 4 ersichtlich, die Dichtfläche 7 am äußeren Umfang der Klappenscheibe 6 und die dazu passende Dichtfläche 5 am inneren Umfang des Sitzringes 4 in Umfangsrichtung derart oval ausgebildet sind, dass sie die Form einer Mantelfläche eines schiefen Kegelstumpfes aufweisen und sich in dieser Mantelfläche eine Schar von Ebenen abbilden lässt, von denen wenigstens eine in der Projektion auf die orthogonal zur Längsachse (3) der Durchtrittsöffnung (2) verlaufenden Ebene (Y) kreisrund ist oder derart von der Kreisform abweicht, dass der Quotient aus kleiner Achse a und großer Achse b größer als 0,98 ist. Hierdurch wird erreicht, dass die vom Sitzring 4 freigelassene lichte Weite der Durchtrittsöffnung einen maximalen Wert annimmt, und zwar unabhängig von der Neigung der Schließebene X gegen die orthogonal zur Längsachse 3 der Durchtrittsöffnung verlaufende Ebene Y.

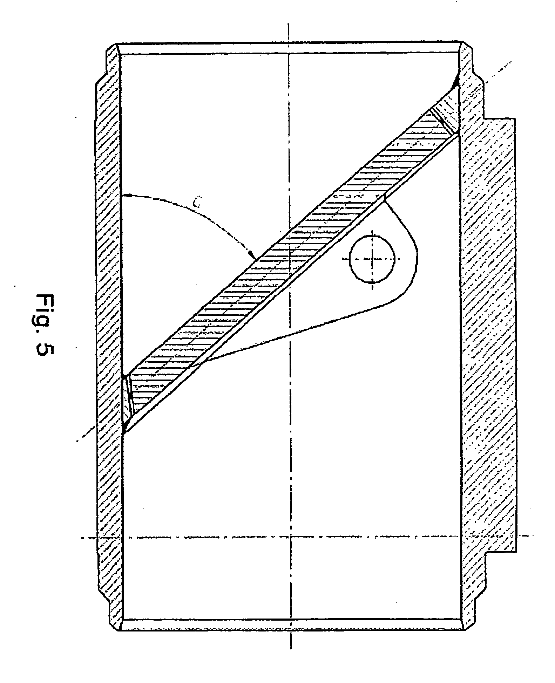

Die Figur 5 zeigt einen vertikalen Längsschnitt durch das Klappengehäuse 1, wobei die Schließebene X und die Längsachse 3 des Klappengehäuses 1 schräg zueinander stehen. Um die selbstschließende Eigenschaft der Rückschlagklappe sicherzustellen, muss der Schrägenwinkel α kleiner als 52° sein.

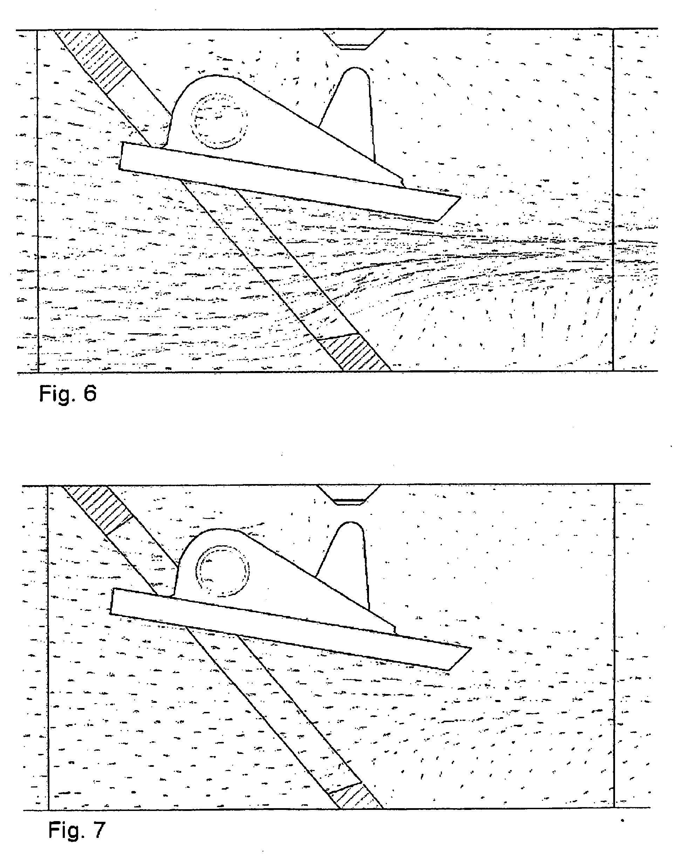

Ferner verdeutlicht die Gegenüberstellung der Figuren 6 und 7 den besonderen Vorteil der Erfindung infolge der veränderten Klappengeometrie. In beiden Figuren wird die Strömung durch Pfeile dargestellt. Die Anzahl der Pfeile ist in beiden Figuren identisch. Die Länge der Pfeile ist ein Maß für die Strömungsgeschwindigkeit. Die Figur 6 zeigt, dass bei gleichem Durchmesser der Durchtrittsöffnung des Gehäuses bei der alten Klappengeometrie die Strömungsgeschwindigkeit größer ist als in Figur 7. Daraus resultiert ein bedeutend höherer Strömungswiderstand. Aus höheren Strömungsgeschwindigkeiten ergibt sich ein größerer Druckverlust. Die neue Klappengeometrie nach Lehre der Erfindung in Figur 7 ermöglicht einen höheren Durchfluss, weil die lichte Weite um 20 % vergrößert ist.

## Patentansprüche

1. Selbsttätig schließende Rückschlagklappe für fließende Druckmedien, mit einer in einer kreisrunderi Durchtrittsöffnung (2) eines Klappengehäuses (1) angeordneten Klappenscheibe (6), die an ihrem äußeren Umfang mit einer Dichtfläche (7) versehen ist, die mit einer dazu passenden Dichtfläche (5) eines an der Innenseite der Durchtrittsöffnung (2) befindlichen Sitzringes (4) zusammenwirkt, wobei die durch den Außenumfang der Klappenscheibe (6) und den Innenumfang des Sitzringes (4) definierte Schließebene (X) geneigt gegen eine orthogonal zur Längsachse (3) der Durchtrittsöffnung (2) verlaufenden Ebene (Y) verläuft und die Klappenscheibe (6) um eine die Durchtrittsöffnung (2) querende Schwenkachse (8) verschwenkbar gelagert ist, die oberhalb der Längsachse (3) der Durchtrittsöffnung (2) und oberhalb der Klappenscheibe (6) angeordnet ist, derart, dass die Klappenscheibe (6) durch ihr Eigengewicht aus der Offenstellung in die Schließstellung fällt, wobei die Dichtfläche (7) am äußeren Umfang der Klappenscheibe (6) und die dazu passende Dichtfläche (5) am inneren Umfang des Sitzringes (4) in Umfangsrichtung derart oval ausgebildet sind, dass sie die Form einer Mantelfläche eines schiefen Kegelstumpfes aufweisen und sich in dieser Mantelfläche eine Schar von Ebenen abbilden lässt, **dadurch gekennzeichnet, dass** von diesen Ebenen wenigstens eine in der Projektion auf die orthogonal zur Längsachse (3) der Durchtrittsöffnung (2) verlaufenden Ebene (Y) kreisrund ist oder derart von der Kreisform abweicht, dass der Quotient aus kleiner Achse a und großer Achse b größer als 0,98 ist.

2. Rückschlagklappe nach Anspruch 1, **dadurch gekennzeichnet, dass** die Dichtflächen (5, 7) von Klappenscheibe (6) und Sitzring (4) aus Metall bestehen.

3. Rückschlagklappe nach den Ansprüchen 1 und 2, **dadurch gekennzeichnet, dass** die Dichtflächen (7, 5) von Klappenscheibe (6) und Sitzring (4) feinbearbeitet sind.

4. Rückschlagklappe nach den Ansprüchen 1 bis 3, **dadurch gekennzeichnet, dass** die Dichtflächen (7, 5) von Klappenscheibe (6) und/oder Sitzring (4) gehärtet sind.

5. Rückschlagklappe nach den Ansprüchen 1 bis 4, **dadurch gekennzeichnet, dass** die Schließebene (X) schräg zur Längsachse (3) des Klappengehäuses(1) verläuft und der Schrägenwinkel (a) zwischen der Schließebene (X) und der Längsachse (3) des Klappengehäuses (1) kleiner als 52° ist.

## Claims

1. A self-closing non-return valve for fluid pressure media, having a valve disc (6) disposed in a circular through passage (2) of a valve housing (1), the outer circumference of said valve disc being provided with a sealing surface (7) which cooperates with a matching sealing surface (5) of a seat ring (4) located on the inside of the through passage (2), wherein the closing plane (X) defined by the outer circumference of the valve disc (6) and the inner circumference of the seat ring (4) is inclined with respect to a plane (Y) orthogonal to the longitudinal axis (3) of the through opening (2) and the valve disc (6) is pivotably mounted about a pivot axis (8) across the through opening (2) which is arranged above the longitudinal axis (3) of the through opening (2) and above the valve disc (6) such that the valve disc (6) falls under its own weight from the open position into the closed position, wherein the sealing surface (7) at the outer circumference of the valve disc (6) and the matching sealing surface (5) at the inner circumference of the seat ring (4) are oval in the circumferential direction such that they are in the shape of a generatrix of a skewed truncated cone to form a family of planes in this generatrix, **characterized in that** from these planes, at least one in the projection onto the plane (Y) orthogonal to the longitudinal axis (3) of the through passage (2) is circular or deviates from the circular shape such that the ratio of the minor axis a to the major axis b is more than 0.98.

2. The non-return valve according to claim 1, **characterized in that** the sealing surfaces (5, 7) of the valve disc (6) and seat ring (4) consist of metal.

3. The non-return valve according to claims 1 and 2, **characterized in that** the sealing surfaces (7, 5) of the valve disc (6) and seat ring (4) are precision machined.

4. The non-return valve according to claims 1 to 3, **characterized in that** the sealing surfaces (7, 5) of the valve disc (6) and/or seat ring (4) are hardened.

5. The non-return valve according to claims 1 to 4, **characterized in that** the closing plane (X) is inclined to the longitudinal axis (3) of the valve housing (1) and the angle of inclination (α) between the closing plane (X) and the longitudinal axis (3) of the valve housing (1) is less than 52°.

## Revendications

1. Clapet anti-retour à fermeture automatique pour des fluides coulant sous pression, avec un disque de clapet (6) disposé dans une ouverture de passage (2) à section circulaire d'un boîtier de clapet (1), lequel clapet est pourvu, à son pourtour extérieur, d'une surface d'étanchéité (7) coopérant avec une surface d'étanchéité (5) d'un siège annulaire (4) situé sur la face intérieure de l'ouverture de passage (2), le plan de fermeture (X) défini par le pourtour extérieur du disque de clapet (6) et la circonférence intérieure du siège annulaire (4) étant incliné par rapport à un plan (Y) s'étendant transversalement à l'axe longitudinal (3) de l'ouverture de passage (2) et le disque de clapet (6) étant monté pivotant autour d'un axe de pivotement (8) qui traverse l'ouverture de passage (2) et est disposé au-dessus de l'axe longitudinal (3) de l'ouverture de passage (2) et au-dessus du disque de clapet (6), de façon que le disque de clapet (6) change de la position d'ouverture à la position de fermeture par son propre poids, et la surface d'étanchéité (7) au pourtour extérieur du disque de clapet (6) et la surface d'étanchéité (5) correspondante sur la circonférence intérieure du siège annulaire (4) ayant une forme ovale telle qu'elles représentent la surface d'enveloppe d'un cône tronqué oblique et qu'une pluralité de plans peut être projetée sur la surface d'enveloppe,
**caractérisé en ce que** la projection de l'un au moins de ces plans sur le plan (Y) s'étendant transversalement à l'axe longitudinal (3) de l'ouverture de passage (2) a la forme d'un cercle ou diffère de la forme de cercle de façon que le rapport entre le petit axe a et le grand axe b est supérieur à 0,98.

2. Clapet anti-retour selon la revendication 1, **caractérisé en ce que** les surfaces d'étanchéité (5, 7) du disque de clapet (6) et du siège annulaire (4) sont en métal.

3. Clapet anti-retour selon la revendication 1 ou 2, **caractérisé en ce que** les surfaces d'étanchéité (5, 7) du disque de clapet (6) et du siège annulaire (4) sont usinées finement.

4. Clapet anti-retour selon l'une quelconque des revendications 1 à 3, **caractérisé en ce que** les surfaces d' étanchéité (5, 7) du disque de clapet (6) et/ou du siège annulaire (4) sont trempées.

5. Clapet anti-retour selon l'une quelconque des revendications 1 à 4, **caractérisé en ce que** le plan de fermeture (X) est oblique par rapport à l'axe longitudinal (3) du boîtier de clapet (1) et que l'angle d'inclinaison (α) entre le plan de fermeture (X) et l'axe longitudinal (3) du boîtier de clapet (1) est inférieur à 52°.
